# FASCICULE DE BREVET EUROPEEN

(11) **EP 2 470 350 B1**
(45) Date de publication et mention de la délivrance du brevet: **29.05.2013**
(21) Numéro de dépôt: 10762729.1
(22) Date de dépôt: 05.08.2010
(51) Int. Cl.: B29C 51/42

(54) **DISPOSITIF DE THERMOFORMAGE D'UN FILM PLASTIQUE**
WARMFORMVORRICHTUNG FÜR EINE KUNSTSTOFFFOLIE
DEVICE FOR THERMOFORMING A PLASTIC FILM

(30) Priorité: 24.08.2009 FR 0955754
(43) Date de publication de la demande: 04.07.2012
(73) Titulaire: Essilor International (Compagnie Générale d'Optique), 94220 Charenton-le-Pont (FR)
(72) Inventeur: ROUSSEL, Eric, F-94220 Charenton-le-Pont (FR)
(74) Mandataire: Cabinet Plasseraud
(86) Numéro de dépôt international: PCT/FR2010/051664
(87) Numéro de publication internationale: WO 2011/023879

(56) Documents cités:
- EP-A1- 0 019 659
- FR-A1- 2 256 014
- US-A- 3 258 813
- US-A- 4 257 756
- US-A1- 2002 062 161

## Description

La présente invention concerne un dispositif de thermoformage d'un film plastique.

Il est connu de préformer un film plastique qui est destiné à être appliqué sur une face courbe d'un substrat, pour réduire des contraintes qui sont produites dans ce film lorsqu'il est assemblé ensuite avec le substrat. De cette façon, le film peut être appliqué sur la face courbe du substrat sans que des étirements excessifs, des plis, des déchirures, des écrasements ou des rayures soient produites dans le film par l'outil qui est utilisé pour l'appliquer. Pour cela, le film plastique est préformé en utilisant un dispositif de thermoformage, voir EP 0019659 A1 et US 2002062162 A1, qui peut comprendre :
- une enceinte à pression interne variable, qui comporte une ouverture dans une face de cette enceinte ;
- un système de fixation du film autour de l'ouverture, qui est adapté pour maintenir fermement un bord périphérique du film de sorte que le film forme une fermeture étanche de l'enceinte ;
- un système de variation et de contrôle de la pression dans l'enceinte ;
- un système de mesure d'une flèche («straight height») du film qui est maintenu par le système de fixation, ce système de mesure étant disposé à l'extérieur de l'enceinte et en face de l'ouverture de celle-ci ; et
- un système de chauffage du film, qui est adapté pour chauffer le film maintenu par le système de fixation, et qui comprend lui-même une unité de soufflage d'air chaud disposée pour produire un flux d'air chaud s'écoulant à l'extérieur de l'enceinte en contact avec le film.

Le film qui est maintenu par le système de fixation présente, dans l'ouverture de l'enceinte, une déformation qui est variable en fonction de la pression qui est créée dans l'enceinte. De cette façon, le film plastique peut être déformé à chaud, avec une amplitude de déformation qui est contrôlée en mesurant la flèche du film dans l'ouverture de l'enceinte.

Par ailleurs, il est aussi connu d'utiliser le volume interne de l'enceinte pour y placer le substrat, en le supportant d'une façon qui est appropriée pour commander un rapprochement du substrat par rapport au film plastique, pendant que ce dernier est encore maintenu dans l'ouverture de l'enceinte par le système de fixation. Ainsi, le dispositif de thermoformage réalise aussi l'application du film sur le substrat, ce qui est particulièrement avantageux par rapport au nombre de manipulations du film qui sont nécessaires pour assembler ensemble le film et le substrat.

Or, pour fournir des mesures de la flèche du film qui soient suffisamment précises, le système de mesure de cette flèche doit être situé sensiblement au droit du centre de l'ouverture de l'enceinte. Pour cette raison, et lorsque le volume interne de l'enceinte est déjà occupé par le substrat, ce système de mesure de la flèche est placé à l'extérieur de l'enceinte.

Dans les dispositifs de thermoformage du type considéré qui sont déjà utilisés, le système de chauffage du film est aussi situé à l'extérieur de l'enceinte, à côté du système de mesure de la flèche du film. Ce système de chauffage est couramment du type à rayonnement infrarouge ou à soufflage d'air chaud. Or l'encombrement qui en résulte, dans l'espace qui est situé devant l'ouverture de l'enceinte, à l'extérieur de celle-ci, perturbe le chauffage du film. La température du film chauffé varie alors entre des points de celui-ci qui sont séparés. La déformation du film produite par le thermoformage présente alors une répartition qui ne correspond plus à la forme qui est désirée. En particulier, la répartition de cette déformation n'est plus invariante par rotation autour d'un axe qui est perpendiculaire à la face de l'enceinte qui comporte l'ouverture, et qui passe par le centre de cette ouverture. Certains des défauts qui ont été cités précédemment apparaissent alors de nouveau lorsque le film qui est ainsi préformé est appliqué sur le substrat, notamment lorsque la face du substrat possède une forme sensiblement sphérique.

En particulier, de tels dispositifs de thermoformage sont utilisés pour préformer un film plastique qui est destiné à être appliqué sur une lentille optique. Les exigences de qualité du composant optique final sont alors particulièrement élevées, notamment lorsqu'il s'agit d'un composant ophtalmique du type verre de lunettes ou ébauche de verre de lunettes. En effet, pour ce domaine d'applications, le produit final est rejeté lorsque des étirements, des plis, des déchirures, des écrasements ou des rayures du film sont visibles à l'oeil nu. Ainsi, pour les applications optiques et ophtalmiques en particulier, les dispositifs de thermoformage qui sont utilisés actuellement ne sont pas satisfaisants.

Un but de la présente invention consiste alors à fournir un dispositif de thermoformage qui ne présente pas les inconvénients précédents, et qui est compatible avec les exigences de qualité des produits optiques ou ophtalmiques.

Pour cela, l'invention propose l'amélioration d'un dispositif de thermoformage tel que décrit précédemment, selon laquelle l'unité de soufflage est adaptée pour que le flux d'air chaud s'écoule parallèlement au film plastique à partir d'un premier côté latéral de l'ouverture de l'enceinte jusqu'à un second côté latéral de cette ouverture, qui est opposé au premier côté.

Ainsi, l'air chaud qui est mis en oeuvre pour chauffer le film plastique peut être amené vers celui-ci à partir d'un côté latéral de l'enceinte, ce qui réduit l'encombrement de l'espace qui est situé à l'extérieur de l'enceinte en face de l'ouverture. Le système de mesure de la flèche du film peut alors être disposé dans cet espace au droit du film, correctement pour fournir des mesures de la flèche du film qui soient précises.

En outre, étant donné que le flux d'air chaud s'écoule parallèlement au film entre deux côtés latéraux de celui-ci qui sont opposés, l'écoulement de cet air chaud peut être particulièrement stable, et avec une répartition qui est constante au contact du film plastique. La température du film chauffé est alors plus uniforme, si bien que le thermoformage confère au film une déformation qui est répartie de la façon désirée. L'application ultérieure du film sur le substrat ne produit plus de défauts qui soient rédhibitoires pour le produit final, même lorsqu'il s'agit d'un produit optique ou ophtalmique tel qu'une lentille ou un verre de lunettes.

De préférence, le dispositif de thermoformage est adapté pour que le flux d'air chaud forme un écoulement laminaire, notamment sans turbulences, parallèlement à et en contact avec le film, entre le premier et le second côté latéral de l'ouverture de l'enceinte. Un tel écoulement laminaire tangentiel du flux d'air chaud sur le film plastique évite que le film plastique déformé soit repoussé par le flux d'air chaud vers le second côté latéral. Ainsi la déformation du film est répartie de façon plus isotrope autour de l'axe central qui est perpendiculaire à l'ouverture.

Les perfectionnements suivants de l'invention permettent d'améliorer encore la répartition du flux d'air chaud sur le film, et donc la répartition de la déformation qui est conférée au film par le thermoformage.

Selon un premier perfectionnement, le dispositif peut comprendre une couronne qui s'étend autour de l'ouverture de l'enceinte, à l'extérieur de celle-ci, avec une face inclinée («slanted») dans un plan méridien de l'ouverture, et un bord interne inférieur de cette face inclinée qui est disposé pour venir en contact avec ou à proximité du film maintenu par le système de fixation, le long d'une partie au moins du bord périphérique du film. L'unité de soufflage est alors disposée pour produire le flux d'air chaud à partir d'un bord externe supérieur de la face inclinée, sur le premier côté latéral de l'ouverture de l'enceinte. Ainsi, le flux d'air chaud est guidé par la face inclinée de la couronne jusqu'au film plastique, ou jusqu'à une proximité du film plastique, en évitant qu'une zone d'air stationnaire soit présente dans un angle qui serait situé en retrait entre la couronne et le film plastique.

Selon un deuxième perfectionnement de l'invention, l'unité de soufflage d'air chaud peut comprendre une buse qui possède une section de sortie de l'air chaud orientée en direction de l'ouverture de l'enceinte, sur le premier côté latéral de l'ouverture, et la buse peut comprendre elle-même un déflecteur avec une face de déflexion oblique, qui est disposée pour rabattre le flux d'air chaud vers le film maintenu par le système de fixation. Ainsi, le flux d'air chaud est guidé en outre en amont de son arrivée sur le film plastique, pour établir encore mieux un écoulement de cet air qui soit stable et laminaire.

Lorsque ces deux perfectionnements de l'invention sont mis en oeuvre simultanément, un angle de la face inclinée de la couronne d'une part et un angle de la face de déflexion d'autre part peuvent avoir une différence qui est inférieure à 20°, de préférence inférieure à 10°, ces deux angles étant mesurés à partir d'un axe qui perpendiculaire à la face de l'enceinte, et dans un plan méridien de son ouverture qui relie les deux côtés latéraux. Ainsi la couronne et le déflecteur forment ensemble un guidage continu et efficace du flux d'air chaud, jusqu'à ce que celui-ci arrive au contact du film plastique.

Selon un troisième perfectionnement de l'invention, la buse peut comprendre des cloisons internes qui sont disposées longitudinalement, pour former une partition de la buse en canaux séparés qui sont destinés à guider l'air chaud vers la section de sortie de la buse.

D'autres particularités et avantages de la présente invention apparaîtront dans la description ci-après d'un exemple de réalisation non limitatif, en référence aux dessins annexés, dans lesquels :
- la figure 1 est une vue générale schématique d'un dispositif de thermoformage selon l'invention ;
- les figures 2a et 2b sont des vues plus détaillées d'une partie du dispositif de thermoformage de la figure 1, respectivement en perspective et de côté ;
- les figures 3a et 3b sont des vues d'une buse utilisée dans le dispositif de thermoformage des figures 1, 2a et 2b, respectivement en perspective et de côté ;
- la figure 3c est une vue en perspective d'un déflecteur de la buse des figures 3a et 3b ; et
- les figures 4a et 4b sont des vues d'une couronne utilisée dans le dispositif de thermoformage des figures 1, 2a et 2b, respectivement en coupe et en perspective.

Pour raison de clarté, les dimensions des éléments qui sont représentés dans ces figures ne sont pas nécessairement en relation avec des dimensions réelles, ni avec des rapports de dimensions réels. En outre, des références identiques qui sont indiquées dans des figures différentes désignent des éléments identiques.

L'invention est maintenant décrite en détail dans le cadre d'une application ophtalmique, consistant à appliquer un film plastique sur une ébauche de verre de lunettes. L'ébauche de verre de lunettes peut être d'une nature quelconque, en matériau minéral, organique voire hybride. Elle possède un diamètre qui est usuellement d'environ 60 mm (millimètre), et une face définitive sur laquelle le film plastique doit être appliqué. Cette face peut être convexe ou concave. Pour ce qui concerne l'application du film, la forme de la face de l'ébauche de verre de lunettes peut être assimilée à une portion de sphère, même s'il s'agit d'une surface complexe sans axe de symétrie, par exemple pour un verre de lunettes progressif. Le film plastique peut aussi être de nature quelconque, constitué d'un ou plusieurs matériaux qui peuvent être déformés à chaud. Il peut avoir une fonction quelconque, ou plusieurs fonctions telles que les fonctions antireflet, antisalissure, anti-rayure, antichoc, antibuée, photochromique, etc. Eventuellement, le film plastique peut avoir une structure complexe, multicouche ou cellulaire. Dans tous les cas, on désigne par film l'élément qui est initialement plan et qui est destiné à être préformé puis appliqué globalement sur l'ébauche de verre de lunettes, quelque soit sa structure interne.

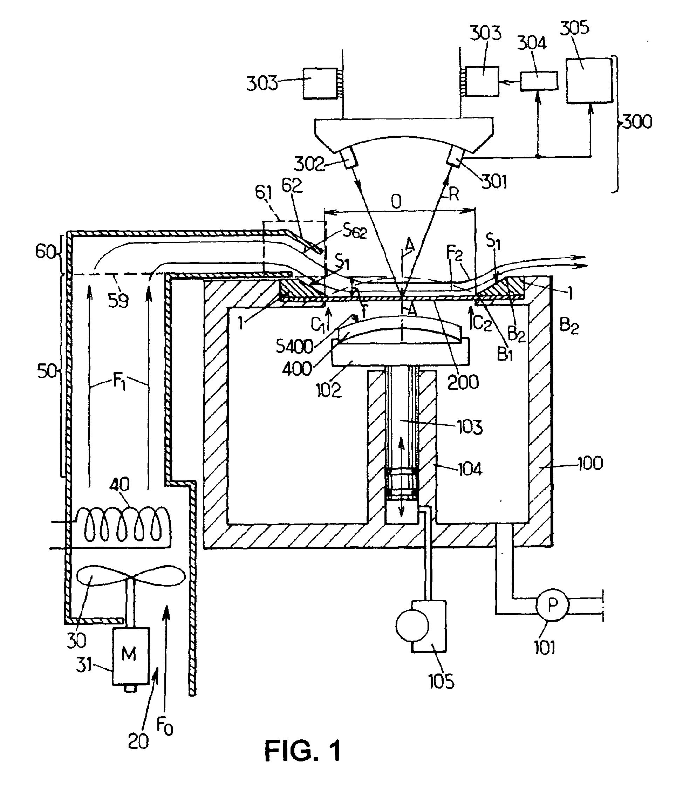

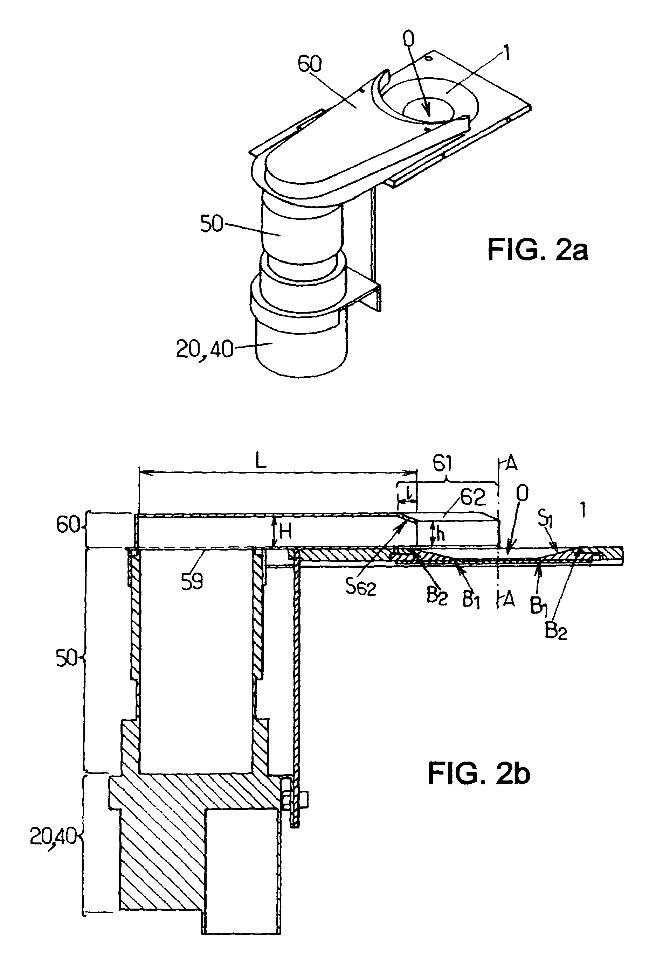

Conformément aux figures 1, 2a et 2b, un dispositif de thermoformage de film plastique comprend :
- une enceinte 100 à pression interne variable, avec une ouverture O qui peut être située sur une face supérieure de l'enceinte ;
- un système de fixation du film plastique 200 à travers l'ouverture O, de façon à fermer l'ouverture O de façon étanche ;
- un système de variation et de contrôle de la pression à l'intérieur de l'enceinte 100, qui peut être constitué par une pompe 101, notée P, et un détecteur de la pression dans l'enceinte 100, non représenté ;
- un système 300 de mesure d'une déformation du film plastique 200 dans l'ouverture O ; et
- un système de chauffage du film 200, qui est constitué par une unité de production et de soufflage d'air chaud.

On suppose dans la suite que l'enceinte 100 est tournée de sorte que l'ouverture O soit sensiblement horizontale et apparaisse sur le dessus de l'enceinte 100.

Lorsque le dispositif de thermoformage est aussi adapté pour réaliser l'application du film 200 sur l'ébauche de verre de lunettes, après que ce film a été préformé par thermoformage, l'enceinte 100 peut contenir en outre un support 102 sur lequel est placé l'ébauche de verre de lunettes. Cette dernière est désignée par la référence 400 sur la figure 1. D'une façon avantageuse, l'ébauche de verre de lunettes 400 peut être placée sur le support 102 de façon à présenter en direction du film 200, la face S₄₀₀ de l'ébauche sur laquelle le film 200 est destiné à être appliqué. A titre d'illustration, la face S₄₀₀ peut être la face convexe du verre de lunettes. Eventuellement, le support 102 peut être adapté pour déplacer l'ébauche de verre de lunettes 400 vers le film 200, notamment pour monter l'ébauche jusqu'à ce qu'elle entre en contact avec le film 200. Pour cela, le support 102 peut être pourvu d'un cylindre 103 qui peut être monté à l'intérieur d'un piston 104, d'une façon contrôlée, par exemple avec des moyens hydrauliques 105.

Le système de fixation du film plastique 200 dans l'ouverture O peut être combiné avec l'un des perfectionnements de l'invention, comme il sera décrit en détail plus loin.

Le film 200 étant plastique lorsqu'il a été préalablement chauffé, il acquiert une déformation à travers l'ouverture O, vers l'extérieur ou vers l'intérieur de l'enceinte 100 selon si celle-ci est mise en surpression ou en dépression par rapport à l'extérieur, au moyen de la pompe 101. L'amplitude de cette déformation peut être caractérisée par la flèche f du film 200 en un point central de l'ouverture O. Cette flèche f est repérée par rapport à la position initiale du film 200, avant que la pression dans l'enceinte 100 soit variée. Pour la plupart des applications, la forme initiale du film 200 est plane.

Le système 300 de mesure de la déformation du film plastique 200 est disposé au dessus du centre de l'ouverture O, à l'extérieur de l'enceinte 100. Dans cette position, il permet des mesures de la flèche f qui sont précises. Le système 300 peut comprendre lui-même :
- une tête de détection 301, qui est adaptée pour recevoir un signal R en provenance d'une partie centrale du film 200 maintenu par le système de fixation ;
- un système 303 de déplacement de la tête de détection 301, qui est adapté pour éloigner ou rapprocher la tête 301 par rapport à la partie centrale du film 200 ;
- un système 304 d'asservissement du système de déplacement 303, qui est adapté pour activer le système 303 de façon à maintenir constante une amplitude du signal R reçu par la tête de détection 301 ; et
- un système 305 de lecture d'une position de la tête de détection 301.

Un tel système de mesure 300 permet de mesurer la flèche f du film 200 à tout instant, notamment d'une façon continue pendant que le film est chauffé. Il permet aussi de mesurer la flèche f en utilisant un signal qui possède une amplitude constante, lorsque ce signal est reçu par la tête de détection 301. La mesure de la flèche f correspond alors au déplacement qui est produit par le système 303. Elle est lue sur le système 305. Des mesures particulièrement précises de la flèche f peuvent ainsi être obtenues. Le signal R qui est reçu par la tête de détection 301 peut être produit par une tête d'émission séparée 302. Dans ce cas, les deux têtes d'émission 302 et de détection 301 sont déplacées simultanément par le système 303. Alternativement, la tête de détection 301 peut aussi avoir la fonction d'émission, selon la technologie de mesure qui est utilisée. De préférence, système 300 peut être du type à réflexion lumineuse ou à ultrasons. Le signal R est alors un faisceau lumineux ou un faisceau d'ultrasons qui est réfléchi sur le film 200.

L'unité de production et de soufflage d'air chaud peut comprendre elle-même, en suivant le sens d'écoulement de l'air :
- un ou plusieurs orifices 20 de prise d'air, à travers le(s)quel(s) un flux d'air F₀ est aspiré ;
- un système d'accélération du flux F₀, qui peut comprendre une hélice 30 entraînée par un moteur 31, et qui produit un flux d'air accéléré F₁ ;
- un système de chauffage de l'air du flux F₁, qui peut être constitué par une résistante chauffante 40 ;
- un segment de conduit 50, qui amène le flux d'air chaud F₁ à une buse 60 ; et
- la buse 60, qui dirige un flux d'air chaud F₂ issu du flux F₁, à travers une section de sortie 61 de la buse et en direction du film plastique 200.

La section de sortie 61 de la buse 60 est située sur un côté latéral C₁ de l'ouverture O, à l'extérieur de l'enceinte 100, et orientée vers un côté C₂ de l'ouverture O, qui est diamétralement opposé au côté C₁. De cette façon, le flux d'air chaud F₂ passe au dessus de et au contact de l'ensemble du film 200 qui est exposé dans l'ouverture O.

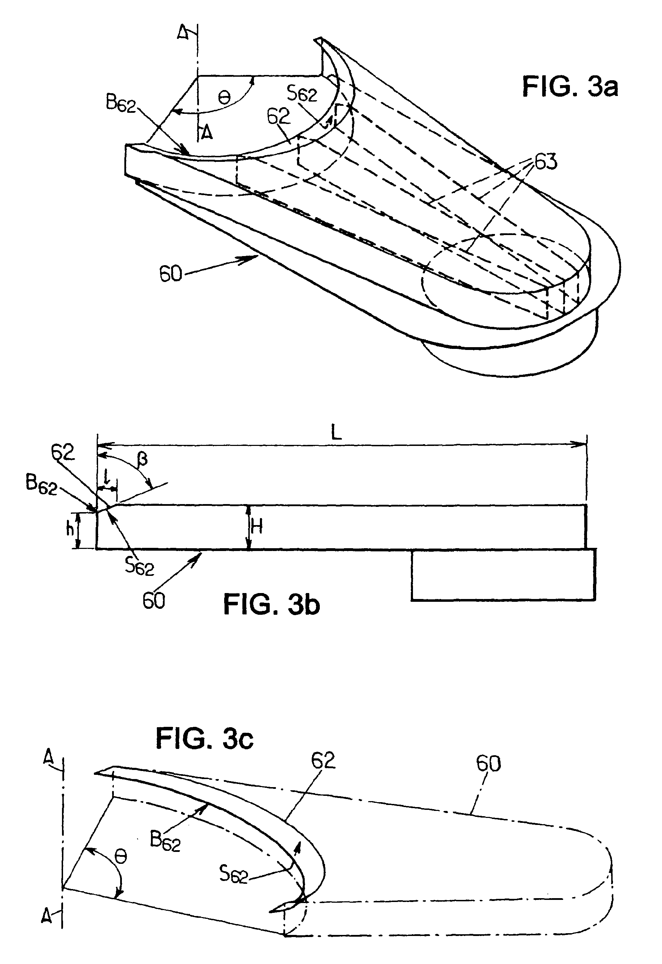

La buse 60 a comme fonction additionnelle de conférer au flux d'air chaud F₂ un écoulement qui soit constant et laminaire, avec une répartition qui soit homogène à travers la section de sortie 61. Pour cela, la buse 60 peut avantageusement être pourvue de cloisons internes, qui sont disposées longitudinalement dans le flux d'air chaud F₂, et qui forment une partition de la buse 60 en canaux séparés. De telles cloisons internes sont référencées 63 sur la figure 3a.

Avantageusement, pour améliorer encore l'homogénéité de la répartition transversale du flux d'air chaud dans la section de sortie 61, un élément additionnel de répartition 59 peut être disposé dans l'unité de soufflage, en amont de la buse 60. Un tel élément est adapté pour produire une perte de charge aéraulique afin de modifier une répartition du flux dans la buse 60. L'élément 59 de répartition du flux d'air chaud peut comprendre notamment une grille, une plaque perforée ou un bloc compacté perméable.

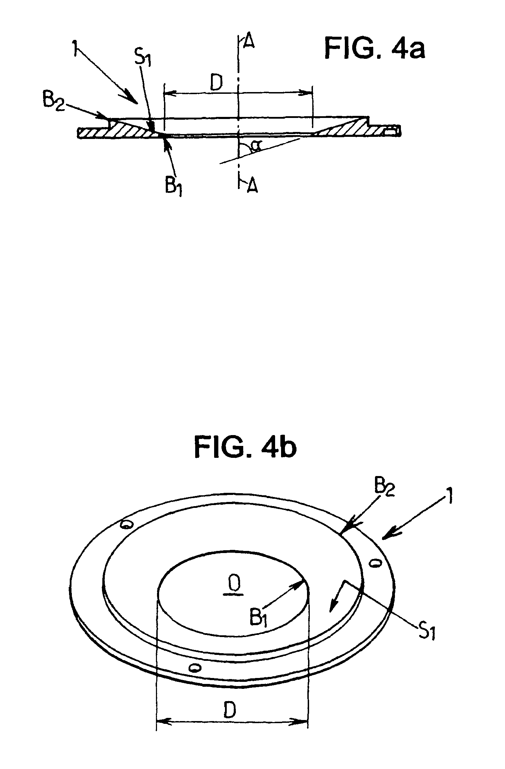

Conformément aux figures 4a et 4b, le dispositif de thermoformage peut comprendre avantageusement une couronne 1 qui entoure l'ouverture O de l'enceinte 100, au dessus du film plastique 200. Une telle couronne 1 peut posséder une face supérieure S₁ qui est inclinée dans un plan méridien de l'ouverture O, vers le centre de cette ouverture et l'intérieur de l'enceinte 100. Par exemple, la face S₁ peut être tronconique («tapered») et continue autour de l'ouverture O de l'enceinte 100. Dans ce cas, elle possède une symétrie de révolution autour d'un axe A-A qui est perpendiculaire à la face de l'enceinte 100 qui comporte l'ouverture O, et qui passe par un centre de cette ouverture. La face inclinée S₁ permet de réduire, voire de supprimer, un écart de hauteur entre un bord inférieur de la section de sortie 61 de la buse 60 et la face du film plastique 200 qui est tournée vers l'extérieur de l'enceinte 100. Un tel écart de hauteur constituerait une marche susceptible de produire des turbulences dans le flux d'air chaud F₂ aux endroits où ce flux entre en contact avec le film 200 et le quitte, c'est-à-dire sur les côtés C₁ et C₂. Autrement dit, la face inclinée S₁ guide le flux d'air chaud F₂ dans la partie inférieure de ce dernier. Pour cela, la face inclinée S₁ de la couronne 1 possède un bord interne inférieur B₁ qui est destiné à être en contact avec ou proche du film 200, et un bord externe supérieur B₂ qui est destiné à être proche de la section de sortie 61 de la buse 60. De préférence, la face inclinée S₁ forme un angle α qui est compris entre 25° (degré) et 90°, ou mieux compris entre 65° et 80°, avec l'axe A-A dans le plan méridien de l'ouverture O qui relie les côtés C₁ et C₂.

Selon un mode de réalisation particulièrement avantageux de l'invention, la couronne 1 peut constituer en outre une bride de serrage du film 200 sur l'enceinte 100. Dans ce cas, la couronne 1 fait partie du système de fixation du film sur l'enceinte, autour de l'ouverture O. Elle possède alors les deux fonctions de guidage du flux d'air chaud F₂ et de fixation du film 200 pour fermer l'enceinte 100 de façon étanche. Alternativement, la couronne 1 peut seulement recouvrir au moins une partie du système de fixation du film 200 sur l'enceinte 100 autour de l'ouverture O.

En référence aux figures 3a à 3c, la buse 60 est pourvue d'un déflecteur 62 à sa section de sortie 61. Lorsque la buse 60 est assemblée avec l'enceinte 100 munie de la couronne 1 (figures 1, 2a et 2b), le déflecteur 62 guide le flux d'air chaud F₂ dans la partie supérieure de ce dernier, lorsque le flux F₂ se rapproche du film 200. Ainsi, la face S₁ de la couronne 1 et le déflecteur 62 sont complémentaires pour guider le flux F₂. Le déflecteur 62 possède une face de déflexion S₆₂ qui est en contact avec le flux d'air chaud F₂, et qui est inclinée pour rabattre le flux F₂ vers le film 200. De préférence, cette face de déflexion S₆₂ est inclinée d'un angle β qui est compris entre 25° et 90°, ou mieux entre 60° et 75°, par rapport l'axe A-A dans le plan méridien de l'ouverture O qui relie les côtés C₁ et C₂.

Avantageusement, l'angle α de la face inclinée S₁ de la couronne 1, mesuré à partir de l'axe A-A, et l'angle β de la face de déflexion S₆₂ du déflecteur 62, aussi mesuré à partir de l'axe A-A, ont une différence qui est inférieure à 20°, de préférence inférieure à 10°. Ainsi, la couronne 1 et le déflecteur 62 forment ensemble un guidage complet du flux d'air chaud F₂, par le dessous et par le dessus de celui-ci, de sorte que le flux F₂ possède un écoulement laminaire et stable.

Par ailleurs, la face de déflexion S₆₂ peut avantageusement posséder un bord d'extrémité B₆₂ qui s'étend sensiblement parallèlement à une partie du bord périphérique de l'ouverture O de l'enceinte 100.

Lorsque le film 200 est à appliquer sur l'ébauche de verre de lunettes 400, l'ouverture O peut être circulaire avec un diamètre D d'environ 77 mm (figures 4a et 4b). La section de sortie 61 de la buse 60 est proche du bord périphérique de l'ouverture O, et peut suivre ce bord sur un secteur angulaire θ d'environ 150° (figures 3a et 3c). La face inclinée S₁ de la couronne 1 peut être un cône d'axe A-A et de demi-angle au sommet α sensiblement égal à 72,5°.

La buse 60 peut avoir une section d'entrée d'air chaud qui est parallèle au plan de l'ouverture O, et circulaire avec un rayon de 31 mm par exemple. L'élément de répartition d'air chaud 59 peut alors être placé dans cette section d'entrée de la buse 60. La longueur L de la buse 60 peut être d'environ 220 mm, dans un plan de section central de la buse (figure 3b). En outre, la buse 60 peut être divisée intérieurement par trois parois internes 63, de façon à former quatre canaux d'amenée de l'air chaud qui ont des sections transversales sensiblement identiques. La hauteur H des parois 63, mesurée parallèlement à l'axe A-A et correspondant à l'épaisseur des canaux, peut être égale à 25,5 mm, par exemple.

Enfin, la face de déflexion S₆₂ peut être une portion d'un cylindre de rayon 77,25 mm et dont l'axe de révolution est incliné de l'angle β par rapport à l'axe A-A. Par exemple, l'angle β peut être égal à 67,5°. La section de sortie 61 peut avoir une hauteur h d'environ 5,6 mm, et la face de déflexion S₆₂ peut avoir une longueur l d'environ 13,5 mm, mesurée en projection parallèlement au plan de l'ouverture O.

L'air chaud peut être amené dans la buse 60 à une température qui est sensiblement égale à 700°C et avec un débit qui est compris entre 400 et 700 l.min⁻¹ (litre par minute). Dans ces conditions, la température moyenne du film 200 chauffé peut être d'environ 140°, avec des écarts par rapport à cette valeur moyenne, à des endroits différents dans l'ouverture O, qui sont inférieurs à 10°C, voire inférieurs à 5°C.

Une fois que le film plastique 200 est ainsi chauffé, la pression dans l'enceinte 100 peut être variée pour préformer le film, en contrôlant en temps réel l'augmentation de la flèche f.

Il est entendu que l'invention peut être mise en oeuvre en modifiant des aspects du mode de réalisation qui a été décrit en détail ci-dessus, tout en conservant certains au moins des avantages cités. En particulier, les valeurs numériques qui ont été énumérées, notamment pour les dimensions, sont illustratives et peuvent être modifiées en fonction de la taille du film plastique qui doit être thermoformé.

## Revendications

1. Dispositif de thermoformage d'un film plastique (200), comprenant :
- une enceinte (100) à pression interne variable, avec une ouverture (O) dans une face de ladite enceinte ;
- un système de fixation du film (200) autour de ladite ouverture (O), adapté pour maintenir fermement un bord périphérique du film de sorte que ledit film forme une fermeture étanche de l'enceinte (100) ;
- un système (101) de variation et de contrôle de la pression dans l'enceinte (100), le film (200) maintenu par le système de fixation présentant dans l'ouverture (O) de l'enceinte une déformation variable en fonction de ladite pression ;
- un système (300) de mesure d'une flèche (f) du film (200) maintenu par le système de fixation, ledit système de mesure étant disposé à l'extérieur de l'enceinte (100) et en face de l'ouverture (O) de ladite enceinte ; et
- un système de chauffage du film (200), adapté pour chauffer ledit film maintenu par le système de fixation, et comprenant lui-même une unité de soufflage d'air chaud (20-62) disposée pour produire un flux d'air chaud (F₂) s'écoulant à l'extérieur de l'enceinte (100) en contact avec le film,
le dispositif étant **caractérisé en ce que** l'unité de soufflage (20-62) est adaptée pour que le flux d'air chaud (F₂) s'écoule parallèlement au film (200) à partir d'un premier côté latéral (C₁) de l'ouverture (O) de l'enceinte (100) jusqu'à un second côté latéral (C₂) de ladite ouverture opposé audit premier côté.

2. Dispositif selon la revendication 1, adapté pour que le flux d'air chaud (F₂) forme un écoulement laminaire parallèlement à et en contact avec le film (200), entre le premier (C₁) et le second (C₂) côté latéral de l'ouverture (O) de l'enceinte (100).

3. Dispositif selon la revendication 1 ou 2, comprenant une couronne (1) s'étendant autour de l'ouverture (O) de l'enceinte (100), à l'extérieur de ladite enceinte, avec une face inclinée (S₁) dans un plan méridien de l'ouverture, et un bord interne inférieur (B₁) de ladite face inclinée étant disposé pour venir en contact avec ou à proximité du film (200) maintenu par le système de fixation, le long d'une partie au moins du bord périphérique dudit film, et l'unité de soufflage (20-62) étant disposée pour produire le flux d'air chaud (F₂) à partir d'un bord externe supérieur (B₂) de la face inclinée, sur le premier côté latéral (C₁) de l'ouverture de l'enceinte.

4. Dispositif selon la revendication 3, dans lequel la face inclinée (S₁) de la couronne (1) est tronconique et continue autour de l'ouverture (O) de l'enceinte (100).

5. Dispositif selon la revendication 3 ou 4, dans lequel la face inclinée (S₁) de la couronne (1) forme un angle (α) compris entre 25° et 90°, de préférence compris entre 65° et 80°, avec un axe (A-A) perpendiculaire à la face de l'enceinte (100), et dans un plan méridien de l'ouverture (O) reliant les premier (C₁) et second (C₂) côtés latéraux.

6. Dispositif selon l'une quelconque des revendications 3 à 5, dans lequel la couronne (1) constitue une bride de serrage du film (200) sur l'enceinte (100), en appartenant au système de fixation dudit film, ou recouvre au moins en partie le système de fixation du film.

7. Dispositif selon l'une quelconque des revendications précédentes, dans lequel l'unité de soufflage d'air chaud comprend une buse (60) ayant une section de sortie de l'air chaud (61) orientée en direction de l'ouverture (O) de l'enceinte (100), sur le premier côté latéral (C₁) de ladite ouverture, ladite buse comprenant un déflecteur (62) avec une face de déflexion oblique (S₆₂), disposée pour rabattre le flux d'air chaud (F₂) vers le film (200) maintenu par le système de fixation.

8. Dispositif selon la revendication 7, dans lequel la face de déflexion (S₆₂) est inclinée d'un angle (β) compris entre 25° et 90°, de préférence entre 60° et 75°, par rapport à un axe (A-A) perpendiculaire à la face de l'enceinte (100), et dans un plan méridien de l'ouverture (O) reliant les premier (C₁) et second (C₂) côtés latéraux.

9. Dispositif selon la revendication 7 ou 8, dans lequel la face de déflexion (S₆₂) possède un bord d'extrémité (B₆₂) qui s'étend parallèlement à une partie d'un bord périphérique de l'ouverture (O) de l'enceinte (100).

10. Dispositif selon la revendication 8 ou 9 ensemble la revendication 5, dans lequel l'angle (α) de la face inclinée (S₁) de la couronne (1) avec l'axe (A-A) perpendiculaire à la face de l'enceinte, dans le plan méridien de l'ouverture (O) reliant les premier (C₁) et second (C₂) côtés latéraux, d'une part, et l'angle (β) de la face de déflexion (S₆₂) du déflecteur (62), par rapport audit axe et dans ledit plan méridien, d'autre part, ont une différence inférieure à 20°, de préférence inférieure à 10°.

11. Dispositif selon l'une quelconque des revendications 7 à 10, dans lequel la buse (60) comprend des cloisons internes (63) disposées longitudinalement, pour former une partition de ladite buse en canaux séparés destinés à guider l'air chaud vers la section de sortie (61).

12. Dispositif selon la revendication 11, dans lequel l'unité de soufflage comprend en outre un élément (59) de répartition du flux d'air chaud, disposé en amont de la buse (60) et adapté pour produire une perte de charge aéraulique afin de modifier une répartition dudit flux dans ladite buse.

13. Dispositif selon la revendication 12, dans lequel l'élément (59) de répartition du flux d'air chaud comprend une grille, une plaque perforée ou un bloc compacté perméable.

14. Dispositif selon l'une quelconque des revendications précédentes, dans lequel le système (300) de mesure de la flèche (f) du film (200) est du type à réflexion lumineuse ou à ultrasons.

15. Dispositif selon l'une quelconque des revendications précédentes, dans lequel le système (300) de mesure de la flèche (f) du film (200) comprend lui-même :
- une tête de détection (301), adaptée pour recevoir un signal (R) en provenance d'une partie centrale du film (200) maintenu par le système de fixation ;
- un système (303) de déplacement de la tête de détection, adapté pour éloigner ou rapprocher ladite tête de détection par rapport à la partie centrale du film (200) ;
- un système (304) d'asservissement du système de déplacement, adapté pour activer ledit système de déplacement de façon à maintenir constante une amplitude du signal (R) reçu par ladite tête de détection ; et
- un système (305) de lecture d'une position de la tête de détection.

## Patentansprüche

1. Einrichtung zum Thermoformen einer Kunststofffolie (200), umfassend:
- einen Behälter (100) mit variablem Innendruck, mit einer Öffnung (O) in einer Fläche des Behälters,
- ein Befestigungssystem für die Folie (200) um die Öffnung (O) herum, das dazu angepasst ist, um einen Umfangsrand der Folie fest zu halten, so dass die Folie einen dichten Verschluss des Behälters (100) bildet,
- ein System (101) zur Variation und Steuerung/Regelung des Drucks in dem Behälter (100), wobei die Folie (200), die von dem Befestigungssystem gehalten wird, in der Öffnung (O) des Behälters eine variable Verformung in Abhängigkeit von dem Druck aufweist,
- ein System (300) zur Messung einer Durchbiegung (f) der Folie (200), die von dem Befestigungssystem gehalten wird, wobei das System zur Messung außerhalb des Behälters (100) und gegenüber der Öffnung (O) des Behälters angeordnet ist, und
- ein System zum Erwärmen der Folie (200), welches dazu angepasst ist, die von dem Befestigungssystem gehaltene Folie zu erwärmen, und das selbst eine Blaseinheit für warme Luft (20-62) umfasst, die angeordnet ist, um eine Strömung warmer Luft (F₂) zu erzeugen, die außerhalb des Behälters (100) in Kontakt mit der Folie strömt,
wobei die Einrichtung **dadurch gekennzeichnet ist, dass** die Blaseinheit (20-62) dazu angepasst ist, dass die Strömung warmer Luft (F₂) ausgehend von einer ersten lateralen Seite (C₁) der Öffnung (O) des Behälters (100) zu einer zweiten lateralen Seite (C₂) der Öffnung gegenüber der ersten Seite parallel zu der Folie (200) strömt.

2. Einrichtung nach Anspruch 1, dazu angepasst, dass die Strömung warmer Luft (F₂) eine laminare Strömung bildet, parallel zu und in Kontakt mit der Folie (200) zwischen der ersten (C₁) und der zweiten (C₂) lateralen Seite der Öffnung (O) des Behälters (100).

3. Einrichtung nach Anspruch 1 oder 2, umfassend einen Ring (1), der sich außerhalb von dem Behälter um die Öffnung (O) des Behälters (100) herum erstreckt, mit einer geneigten Seite (S₁) in einer Meridian-Ebene der Öffnung, und wobei ein innerer unterer Rand (B₁) der geneigten Seite so angeordnet ist, dass er in Kontakt mit oder in die Nähe von der Folie (200) kommt, die von dem Befestigungssystem gehalten wird, entlang von wenigstens einem Teil des Umfangsrandes der Folie, und wobei die Blaseinheit (20-62) angeordnet ist, um die Strömung warmer Luft (F₂) ausgehend von einem äußeren oberen Rand (B₂) der geneigten Seite, auf der ersten lateralen Seite (C₁) der Öffnung des Behälters zu erzeugen.

4. Einrichtung nach Anspruch 3, wobei die geneigte Seite (S₁) des Rings (1) kegelstumpfförmig ist und um die Öffnung (O) des Behälters (100) umläuft.

5. Einrichtung nach Anspruch 3 oder 4, wobei die geneigte Seite (S₁) des Rings (1) einen Winkel (α) zwischen 25° und 90°, bevorzugt zwischen 65° und 80°, mit einer Achse (A-A) senkrecht zu der Fläche des Behälters (100) und in einer Meridian-Ebene der Öffnung (O) bildet, welche die erste (C₁) und die zweite (C₂) laterale Seite verbindet.

6. Einrichtung nach einem der Ansprüche 3 bis 5, wobei der Ring (1) einen Klemm-Element für die Folie (200) auf dem Behälter (100) bildet, wobei er zu dem Befestigungssystem für die Folie gehört, oder das Befestigungssystem für die Folie wenigstens teilweise bedeckt.

7. Einrichtung nach einem der vorhergehenden Ansprüche, wobei die Blaseinheit für warme Luft eine Düse (60) umfasst, die einen Austrittsquerschnitt für die warme Luft (61) aufweist, der in Richtung der Öffnung (O) des Behälters (100) orientiert ist, auf der ersten lateralen Seite (C₁) der Öffnung, wobei die Düse ein Ablenk-Element (62) mit einer Ablenk-Fläche (S₆₂) umfasst, die angeordnet ist, um die Strömung warmer Luft (F₂) zu der von dem Befestigungssystem gehaltenen Folie (200) hin umzulenken.

8. Einrichtung nach Anspruch 7, wobei die Ablenkfläche (S₆₂) unter einem Winkel (β) geneigt ist, zwischen 25° und 90°, bevorzugt zwischen 60° und 75°, in Bezug auf eine Achse (A-A), die senkrecht ist zu der Fläche des Behälters (100), und in einer Meridian-Ebene der Öffnung (O), welche die erste (C₁) und die zweite (C₂) laterale Seite verbindet.

9. Einrichtung nach Anspruch 7 oder 8, wobei die Ablenk-Fläche (S₆₂) einen Endrand (B₆₂) besitzt, der sich parallel zu einem Teil von einem Umfangsrand der Öffnung (O) des Behälters (100) erstreckt.

10. Einrichtung nach Anspruch 8 oder 9, zusammen mit Anspruch 5, wobei der Winkel (α) der geneigten Seite (S₁) des Rings (1) mit der Achse (A-A) senkrecht zu der Seite des Behälters, in der Meridian-Ebene der Öffnung (O), welche die erste (C₁) und die zweite (C₂) laterale Seite verbindet, einerseits, und der Winkel (β) der Ablenk-Fläche (S₆₂) des Ablenk-Elements (62) in Bezug zu der Achse und in der Meridian-Ebene andererseits, eine Differenz aufweisen, die kleiner als 20° ist, bevorzugt kleiner als 10°.

11. Einrichtung nach einem der Ansprüche 7 bis 10, wobei die Düse (60) interne Trennwände (63) umfasst, die longitudinal angeordnet sind, um eine Unterteilung der Düse in separate Kanäle zu bilden, die dazu bestimmt sind, die warme Luft zu dem Austrittsquerschnitt (61) zu leiten.

12. Einrichtung nach Anspruch 11, wobei die Blaseinheit weiterhin ein Element (59) zur Verteilung der Strömung von warmer Luft umfasst, das stromaufwärts von der Düse (60) angeordnet und dazu angepasst ist, einen Verlust von Aeraulik-Last zu erzeugen, um eine Verteilung der Strömung in der Düse zu modifizieren.

13. Einrichtung nach Anspruch 12, wobei das Element (59) zur Verteilung der Strömung warmer Luft ein Gitter umfasst, eine perforierte Platte oder einen verdichteten durchlässigen Block.

14. Einrichtung nach einem der vorhergehenden Ansprüche, wobei das System (300) zum Messen der Durchbiegung (f) der Folie (200) vom Typ mit Licht-Reflexion oder Ultraschall ist.

15. Einrichtung nach einem der vorhergehenden Ansprüche, wobei das System (300) zur Messung der Durchbiegung (f) der Folie (200) selbst umfasst:
- einen Erfassungskopf (301), der dazu angepasst ist, ein Signal (R) zu empfangen, welches von einem zentralen Teil der Folie (200) kommt, die von dem Befestigungssystem gehalten wird,
- ein System (303) zur Verlagerung des Erfassungskopfs, das dazu angepasst ist, den Erfassungskopf von dem zentralen Teil der Folie (200) zu entfernen oder an diesen anzunähern,
- ein Steuer-/Regelsystem (304) für das Verlagerungssystem, das dazu ausgebildet ist, das Verlagerungssystem so zu aktivieren, dass eine Amplitude des von dem Erfassungskopf empfangenen Signals (R) konstant gehalten wird, und
- ein System (305) zum Auslesen einer Position des Erfassungskopfs.

## Claims

1. Device for thermoforming a plastic film (200), comprising:
- a chamber (100) with variable internal pressure, having an opening (O) in a side of said chamber;
- an attachment system for attaching the film (200) around said opening (O), adapted to hold a peripheral edge of the film firmly so that said film closes off and seals the chamber (100);
- a system (101) for varying and controlling the pressure in the chamber (100), the film (200) held by the attachment system deforming in the chamber opening (O) into a deformation which varies as a function of said pressure;
- a measurement system (300) for measuring a sag (f) of the film (200) held by the attachment system, said measurement system being arranged outside the chamber (100) and facing the opening (O) of said chamber; and
- a system for heating the film (200), adapted to heat said film held by the attachment system, and comprising a hot air blowing unit (20-62) arranged to produce a stream of hot air (F₂) flowing externally to the chamber (100) and in contact with the film,
the device being **characterized in that** the blowing unit (20-62) is adapted so that the stream of hot air (F₂) flows parallel to the film (200) from a first lateral side (C₁) of the opening (O) of the chamber (100) to a second lateral side (C₂) of said opening, said second side being opposite said first side.

2. Device according to claim 1, adapted so that the stream of hot air (F₂) forms a laminar flow parallel to and in contact with the film (200), between the first (C₁) and the second (C₂) lateral sides of the opening (O) of the chamber (100).

3. Device according to claim 1 or 2, comprising a ring (1) extending around the opening (O) of the chamber (100), outside said chamber, with a face (S1) that is slanted within a meridian plane of the opening, and with a lower internal edge (B₁) of said slanted face being arranged to come in contact with or in proximity to the film (200) held by the attachment system, along at least a portion of the peripheral edge of said film, and the blowing unit (20-62) being arranged to produce the stream of hot air (F₂) from an upper external edge (B₂) of the slanted face, on the first lateral side (C₁) of the chamber opening.

4. Device according to claim 3, wherein the slanted face (S₁) of the ring (1) is tapered and continuous around the opening (O) of the enclosure (100).

5. Device according to claim 3 or 4, wherein the slanted face (S₁) of the ring (1) forms an angle (α) which is between 25° and 90°, and preferably between 65° and 80°, relative to an axis (A-A) perpendicular to the face of the chamber (100), and in a meridian plane of the opening (O) connecting the first (C₁) and second (C₂) lateral sides.

6. Device according to any one of claims 3 to 5, wherein the ring (1) acts as a clamp holding the film (200) onto the chamber (100), being a part of the attachment system for said film, or at least partially overlaps the attachment system for the film.

7. Device according to any one of the preceding claims, wherein the hot air blowing unit comprises a nozzle (60) having a hot air outlet (61) directed towards the opening (O) of the chamber (100), on the first lateral side (C₁) of said opening, said nozzle comprising a deflector (62) with an oblique deflecting face (S₆₂), arranged to redirect the stream of hot air (F₂) towards the film (200) held in place by the attachment system.

8. Device according to claim 7, wherein the deflecting face (S₆₂) is slanted at an angle (β) which is between 25° and 90°, and preferably between 60° and 75°, relative to an axis (A-A) perpendicular to the face of the chamber (100), and in a meridian plane of the opening (O) connecting the first (C₁) and second (C₂) lateral sides.

9. Device according to claim 7 or 8, wherein the deflecting face (S₆₂) has an end edge (B₆₂) which extends parallel to a portion of a peripheral edge of the opening (O) of the chamber (100).

10. Device according to claim 8 or 9, together with claim 5, wherein a difference is less than 20°, and preferably less than 10°, between the angle (α) of the slanted face (S₁) of the ring (1) relative to the axis (A-A) perpendicular to the face of the chamber, in the meridian plane of the opening (O) connecting the first (C₁) and second (C₂) lateral sides, on one hand, and the angle (β) of the deflecting face (S₆₂) of the deflector (62), relative to said axis and in said meridian plane, on the other hand.

11. Device according to any one of claims 7 to 10, wherein the nozzle (60) comprises internal walls (63) arranged longitudinally to partition said nozzle into separate channels which guide the hot air towards the outlet (61).

12. Device according to claim 11, wherein the blowing unit additionally comprises an element (59) for distributing the stream of hot air, arranged upstream from the nozzle (60) and adapted to produce a loss of air pressure in order to modify the distribution of said stream in said nozzle.

13. Device according to claim 12, wherein the element (59) for distributing the stream of hot air comprises a grid, a perforated plate, or a compacted permeable block.

14. Device according to any one of the preceding claims, wherein the system (300) for measuring the sag (f) of the film (200) is of a type that uses reflection of light or ultrasound.

15. Device according to any preceding of the above claims, wherein the system (300) for measuring the sag (f) of the film (200) itself comprises:
- a detection head (301), adapted for receiving a signal (R) from a central portion of the film (200) held by the attachment system;
- a detection head displacement system (303), adapted for moving said detection head closer or further away relative to the central portion of the film (200);
- a control system (304) for the displacement system, adapted for activating said displacement system in a manner that maintains a constant amplitude of the signal (R) received by said detection head; and
- a system (305) adapted for reading a position of the detection head.
